# EUROPEAN PATENT APPLICATION

(11) **EP 1 790 826 A1**
(43) Date of publication of application: **30.05.2007**
(21) Application number: 05025689.0
(22) Date of filing: 24.11.2005
(51) Int. Cl.: F01D 9/04, F01D 5/14

(54) **Turbine vane for a turbine of a thermal power plant**

(71) Applicant: SIEMENS AKTIENGESELLSCHAFT, 80333 München (DE)
(72) Inventor: Baldauf, Stefan, Dr., 85737 Ismaning (DE); Bolms, Hans-Thomas, Dr., 45481 Mülheim an der Ruhr (DE)

(57) **Abstract**

A turbine vane (10), in particular a guide vane, for a turbine of a thermal power plant comprising a blade section (14) and at least one interlocking structure (16) for engaging with a vane mount of said turbine (10), said interlocking structure (16) being made integrally with said blade section (14), is according to the invention characterized in that said blade section (14) has a profile adapted to fluid flow conditions of a variety of turbines of different design types, and in that said turbine vane (10) has a mounting section (16a) for mounting a fluid restriction member (30, 32) designed for limiting said flow of a turbine propulsion fluid in a radial direction of said turbine, made separately from said turbine vane (10) and being individually adapted to the fluid flow conditions of a turbine of a specific design type.

## Description

This invention relates to a turbine vane, in particular to a guide vane, for a turbine of a thermal power plant comprising a blade section and at least one interlocking structure for engaging with a vane mount of the turbine, the interlocking structure being made integrally with the blade section. Further, the present invention relates to a guide vane ring for a turbine of a thermal power plant having at least two turbine vanes formed as guide vanes, each comprising a blade section and at least one interlocking structure, as well as a vane mount, which engages with the interlocking structure of the respective at least two turbine vanes. Additionally, the present invention relates to a turbine of a thermal power plant having such a guide vane ring. Finally, the present invention relates to a process of manufacturing a turbine for a thermal power plant comprising the steps of manufacturing at least one turbine vane, in particular a guide vane, by manufacturing a blade section of the turbine vane integrally with an interlocking structure for engaging with a vane mount of the turbine, and mounting the turbine vane in the vane mount by means of the interlocking structure.

Turbines for a thermal power plant, like steam turbines or gas turbines, exist in a range of different design types. The turbines of the different design types are for example adapted to different rotational speeds, different mass flow rates or different turbine access conditions.

For the turbines currently known in the state of the art different turbine vanes are designed and manufactured separately for the different design types. Both design and manufacturing causes a considerable amount of effort in terms of cost of manufacturing and cost of development. The large development effort involved often leads, in particular for turbines manufactured only in small numbers, to less than optimum designs from the technical perspective.

One approach for alleviating this problem used in the prior art includes the use of the same design for parts for turbines of different sizes and merely scaling the turbine parts to adapt to the turbine size accordingly. With this approach there is still the problem of having to handle different parts for different turbines in model generation, drawings, tools, qualification, manufacturing and logistics etc. According to an alternative approach in the prior art some common parts are used for different turbine design types. However, this concept leads to non-optimum fluid flow results and therefore to non-optimum performance of the turbines.

It is an object of the present invention to provide a turbine of a thermal power plant having a guide vane ring of the aforementioned kind and a process of manufacturing a turbine for a thermal power plant of the aforementioned kind, which allows the turbine to be manufactured more cost efficiently without adversely effecting the operating efficiency of the turbine.

The above object is solved according to the present invention by providing a turbine vane of the aforementioned kind, in which the blade section has a profile adapted to fluid flow conditions of a variety of turbines of different design types and which has a mounting section for mounting a flow restriction member designed for limiting the flow of a turbine propulsion fluid in a radial direction of the turbine, wherein the flow restriction member is made separately from the turbine vane and is individually adapted to the fluid flow conditions of a turbine of a specific design type.

Further, the above object is solved according to the present invention by providing a guide vane ring of the aforementioned kind, in which the blade sections each have a profile adapted to the fluid flow conditions of a variety of turbines of different design types, and which guide vane ring further comprises a flow restriction member designed for limiting the flow of a turbine propulsion fluid in a radial direction of the turbine, which flow restriction member is made separately from the turbine vanes and is individually adapted to fluid flow conditions of a turbine of a specific design type. Further, the above object is solved according to the present invention by providing a turbine of a thermal power plant having the above mentioned guide ring according to the present invention.

Finally, the above object is solved according to the present invention by providing a process of the aforementioned kind, in which the blade section is manufactured to have a profile adapted to the fluid flow conditions of turbines of a variety of different design types, and which process comprises the following steps: providing a flow restriction member manufactured separately from the at least one turbine vane, such that the flow restriction member is adapted to the fluid flow conditions of a turbine of a specific design type, and mounting the flow restriction member in the turbine for flow restriction of a turbine propulsion fluid in a radial direction of the turbine.

By providing the blade section with a profile adapted to fluid flow conditions of a variety of turbines of different design types according to the invention a common design can be used for the turbine vane to be mounted in turbines of different design types. This allows a reduction of both development and manufacturing costs. By manufacturing the flow restriction member separately from the turbine vane and adapting the design of the flow restriction member individually to the flow conditions of a turbine of a specific design type the different fluid flow characteristics in fluid flow channels of turbines of different design types can be accommodated for by varying the design of the flow restriction member.

Therewith, the operating efficiency of the turbine is optimised by the individual design of the flow restriction member for restricting the turbine propulsion fluid in a radial direction of the turbine. Accordingly, the solution according to the present invention allows a separation of the different functions of different turbine parts and therefore leads to reduced development and manufacturing costs.
Further, the concept of the present invention allows also technical improvement of the overall fluid flow design of the turbine. In addition, the portion of sending air in the turbine area can be reduced, which results in a further improvement of the turbine efficiency.

Preferably, the turbine vane including the blade section and the interlocking structure is manufactured by a casting process, like casting. The flow restriction member preferably takes over the function of a inner/outer platform. In turbine vanes, particularly guide vanes known in the prior art these inner and outer platform are integrally casted together with the blade section. By separating the blade section and the platforms according to the invention also the complexity of the assembly parts is reduced which result in a further reduction in the costs for the parts. The interlocking structure is preferably arranged at an end of a turbine vane. Advantageously, both turbine vane ends are each provided with an interlocking structure.

Preferably, the profile of the blade section is adapted to fluid flow conditions of a variety of turbines designed for different rotational speeds, different mass flow rates and/or different turbine access conditions. That means, a common design of the blade section for at least a group of turbines with one or many of the above parameters being varyable is found. For each the above turbine types individually optimised designs of the flow restriction member are provided. With this concept, for example high pressure, medium pressure and low pressure turbines can use the same turbine vane design, which reduces the overall development and manufacturing costs considerably.

It is further practical, if the interlocking structure has a shaped profile in a sectional view along the longitudinal direction of the turbine vane. With such a shaped profile a strong engagement with the vane mount of the turbine can be achieved by forming the shaped profile integrally during the manufacturing process of the turbine vane. The turbine vane including the interlocking structure is preferably made by a cast iron process, so the shaped profile is strong enough to handle strong forces acting upon the turbine vane. This allows the turbine vane to be used for a large variety of turbine design types, that means also for turbines adapted to large mass flow rates and for high pressure turbines. It is further advantageous, if the interlocking structure extends in a sectional view along a transverse direction of the turbine in a laminar fashion. That means, the interlocking structure has a voluminous shape and is not flat like a strip of small thickness. This way the interlocking structure forms a strong engagement element, which can absorb large forces.

Preferably, the interlocking structure comprises a cooling channel for ducting cooling medium through the turbine vane. This allows easy access of the cooling medium into the turbine vane. This way the turbine vane is particularly suitable for use in high temperature type turbines.

Further preferably the cooling channel is arranged for ducting the cooling medium into a cooling cavity of the blade section. Advantageously, the cooling cavity of the blade section has at least one cavity opening disposed laterally of the interlocking structure, which facilitates the manufacturing of the turbine vane, in particular by a casting process. It is further practical, if the at least one cavity opening is closed by at least one respective plug. Preferably the flow restriction members are arranged in such close proximity to the end of the blade section, that the at least one plug is blocked in its position covering the respective cavity opening.

Advantageously, the interlocking structure is machinable into different shapes, each of which allowing the turbine vane to be arranged in a different vane position within the turbine. That means, after the blade section is integrally manufactured together with the interlocking structure e.g. by the process of iron casting, the shape of the interlocking structure can be mechanically adapted into the variety of different shapes. Each of theses shapes allows the turbine vane to be arranged in a different vane position within a respective turbine. Therefore the turbine vane can be arranged in turbines of different design types in different orientations. This makes the use of a common turbine vane for turbines of different design types more practical.

In an advantageous embodiment of the inventive guide vane ring the flow restriction member borders a large angular range of a flow channel of the turbine for guiding the flow of a propulsion fluid. In particular the flow restriction member surrounds the flow channel completely. The flow restriction member, preferably taking over the function of the inner and outer platforms of turbine vanes, taking account of the thermal expansion can be designed having large segments. Preferably, the flow restriction members for the different design types of turbines can be individually designed as 360° segments. Due to the resulting small number of turbine parts leakage losses in the turbine can therewith be reduced. Due to the reduction of parts cooling of the resulting relatively simple parts can be implemented easily and efficiently, for example by use of impingement cooling.

It is further advantageous, if the flow restriction member comprises at least two separate flow restriction segments arranged next to each other in an axial direction of the guide vane ring. That means a separation of the flow restriction member in axial direction of the turbine is made, to get an upstream and downstream segments, with respect to the propulsion fluid. Therewith the guide vane ring can be easily mounted by arranging the respective flow restriction segments next to each other.

The mounting of the guide vane ring and therefore of the resulting turbine is further facilitated, if the flow restriction segments are arranged on opposite sides of the turbine vanes and each of the flow restriction segments have notches for accommodating the interlocking structures of the turbine vanes. Advantageously, respective notches of neighbouring flow restriction segments face each other to form openings for the interlocking structures of the turbine vanes. For mounting the guide vane ring, the flow restriction segments merely have to be arranged on both sides of the turbine vanes such that the interlocking structures of the turbine vanes pass through respective openings formed by oppositely facing notches of the respective flow restriction segments. Advantageously, the openings of the flow restriction segments surround neck portions of the interlocking structures.

It is further practical, if the guide vane ring comprises an adapter element adjusted to the specific design type of the turbine, via which the flow restriction member is attached to at least one of the turbine vanes. The provision of such an adapter element simplifies the manufacturing process of the turbine vane, in particular a casting process, as the clamping of the casting cores is facilitated by larger openings.

A detailed description of the present invention is provided herein below with reference to the following diagrammatic drawings, in which:
- Fig. 1: is a perspective view of an embodiment of a turbine vane according to the present invention;
- Fig. 2: is a perspective view of an embodiment of a turbine for a thermal power plant having consecutively arranged guide vane rings according to the present invention comprising turbine vanes shown in Fig. 1;
- Fig. 3: is a sectional view of the turbine according to Fig. 2 along a flow channel of the turbine propulsion fluid and
- Fig. 4: is a front view of a portion of the turbine according to Fig. 3.

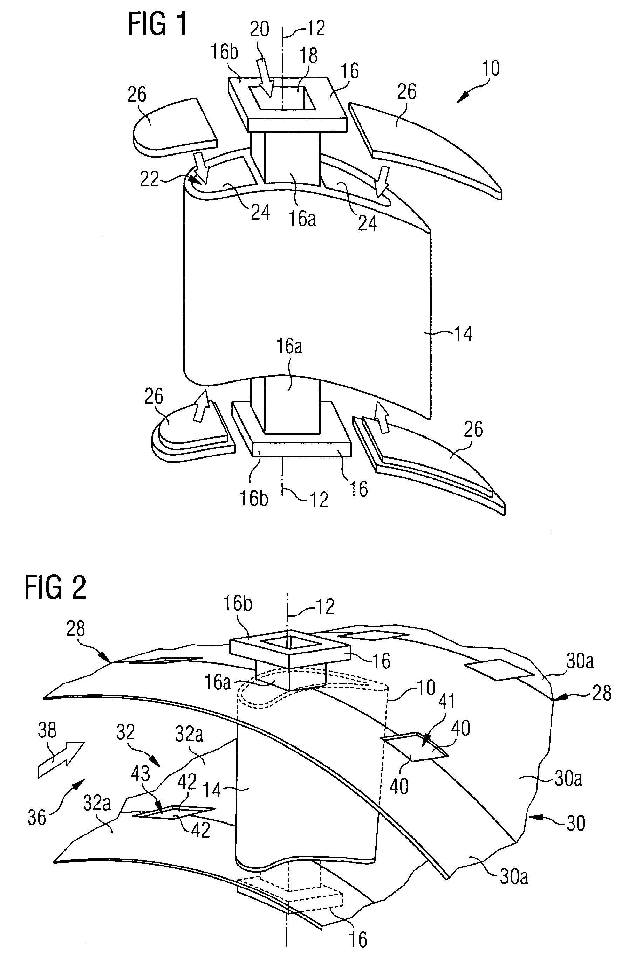

Fig.1 shows a turbine vane 10 in the form of a guide vane having a longitudinal axis 12. The turbine vane 10 comprises a central blade section 14 as well as interlocking structures 16 arranged on both inner and outer sides of the blade section 14 along the longitudinal axis 12. In the depiction of Fig. 1 the interlocking structures 16 extend at the top and the bottom of the blade section 14. The turbine vane 10 including the blade section 14 and the interlocking structures 16 is manufactured in one piece e.g. by the process of casting.

The interlocking structures 16 each comprise a neck portion 16a extending from the blade section 14 and a flange portion 16b on both outer ends of the neck portions 16a. The flange portion 16b extends in a transverse direction relative to the longitudinal axis 12, causing the interlocking structures 16 to have a shaped profile in a sectional view along the longitudinal axis 12 of the turbine vane 10. The interlocking structures 16 are designed for engaging with a vane mount of the turbine in order to solidly attach the turbine vane 10 within the turbine structure.

The interlocking structures 16 further each comprise a cooling channel 18 for ducting cooling medium 20 like cooling air into a cooling cavity 22 of the blade section 14. The cooling cavity 22 of the blade section 14 has cavity openings 24 disposed laterally of the respective interlocking structures 16 owing to the manufacturing process of the turbine vane 10 by casting. These cavity openings 24 are closed by respective plugs 26, which can also act as adapter elements. In Example, if the turbine vanes 10 are designed for different types of turbines having flow restriction members of different inner and outer radii, the plugs 26 adapt the different curvatures of the flow restriction member 30, 32 to the turbine vanes 10 without leaving a gap therebetween.

As indicated in Fig. 2, several turbine vanes 10 are arranged in guide vane rings 28. Several guide vane rings 28 are arranged behind each other along a flow channel 36 in a flow direction 38 of a propulsion fluid. In this arrangement the turbine vanes 10 are fixed in a vane mount not shown in the drawings both via its respective outer and inner interlocking structures 16. The flow channel 36 is delimited by an outer flow restriction member 30 and an inner flow restriction member 32. The outer flow restriction member 30 and the inner flow restriction member 32 each comprises flow restriction segments 30a and 32a, which are, as shown in Fig. 2 arranged behind each other in the flow direction 38 of the propulsion fluid. The different flow restriction segments 30a and 32a, respectively, are designed for arranging one from each side to the neck portions 16a of the interlocking structures 16. For that purpose the flow restriction segments 30a and 32a have a corresponding number of notches 40 and 42, which form, when combined with a respective neighbouring flow restriction segment 30a or 32a a rectangular opening 41 and 43, respectively, for accommodating the respective neck portions 16a.

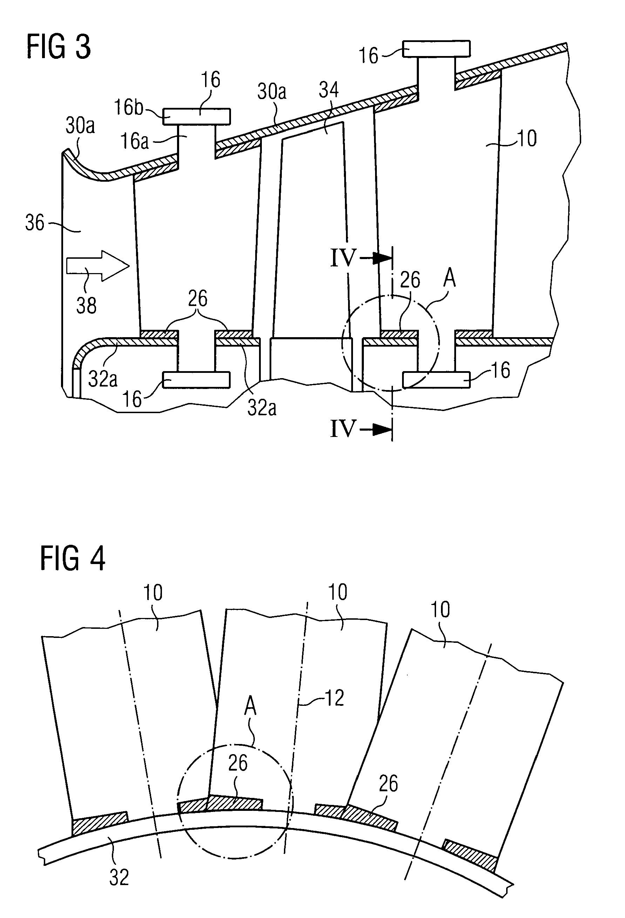

As can be seen in the longitudinal sectional view of Fig. 3 the flow restriction segments 32a of the inner flow restriction member 32 form an inner housing of the flow channel 36. They form a cylindrically shaped object around the hub of the turbine, not shown in the drawings. The flow restriction segments 32a of the outer flow restriction member 30 form an outer housing of the flow channel 36 in the shapes of cone frustums. As further shown in Fig. 3, moving blades 34 are arranged between the turbine vanes 10. As can be seen both in Fig. 3 and in Fig. 4, the flow restriction members 30 and 32 are arranged in such closed proximity to the ends of the blade sections 14, that the plugs 26, arranged in order to close the cavity openings 24 of the blade sections 14, are blocked in their positions covering the respective cavity openings 24.

Any reference signs in the claims shall not be construed as limiting the scope of the invention. While the invention has been described with respect to a limited number of embodiments and applications, it will be appreciated that many variations, modifications and other applications of the invention may be made.

## Claims

1. Turbine vane (10), in particular guide vane, for a turbine of a thermal power plant comprising a blade section (14) and at least one interlocking structure (16) for engaging with a vane mount of said turbine, said interlocking structure (16) being made integrally with said blade section (14),
**characterized in that** said blade section (14) has a profile adapted to fluid flow conditions of a variety of turbines of different design types, and **in that** said turbine vane (10) has a mounting section (16a) for mounting a flow restriction member (30,32) designed for limiting said flow of a turbine propulsion fluid in a radial direction of said turbine, made separately from said turbine vane (10) and being individually adapted to the fluid flow conditions of a turbine of a specific design type.

2. Turbine vane according to claim 1,
wherein said profile of said blade section (14) is adapted to fluid flow conditions of a variety of turbines designed for different rotational speeds, different mass flow rates and/or different turbine access conditions.

3. Turbine vane according to claim 1 or 2,
wherein said interlocking structure (16) has a shaped profile in a sectional view along a longitudinal axis (12) of said turbine vane (10).

4. Turbine vane according to any one of the preceding claims,
wherein said interlocking structure (16) comprises a cooling channel (18) for ducting cooling medium (20) through said turbine vane (10).

5. Turbine vane according to any one of the preceding claims,
wherein said interlocking structure (16) is machinable into different shapes, each of which allowing said turbine vane (10) to be arranged in a different vane position within said turbine.

6. Guide vane ring (28) for a turbine of a thermal power plant having at least two turbine vanes (10) formed as guide vanes, in particular according to any one of the preceding claims, each comprising a blade section (14) and at least one interlocking structure (16) made integrally with said blade section (14), as well as a vane mount, which engages with said interlocking structures (16) of said respective at least two turbine vanes (10),
**characterized in that** said blade sections (14) each have a profile adapted to said fluid flow conditions of a variety of turbines of different design types, and **in that** said guide vane ring (28) further comprises a flow restriction member (30, 32) designed for limiting said flow of a turbine propulsion fluid in a radial direction of said turbine, made separately from said turbine vanes (10) and being individually adapted to fluid flow conditions of a turbine of a specific design type.

7. Guide vane ring according to claim 6,
wherein said flow restriction member (30, 32) borders a large angular range of a flow channel (36) of said turbine for guiding the flow of a propulsion fluid, in particular surrounds said flow channel (36) completely.

8. Guide vane ring according to claim 6 or 7,
wherein said flow restriction member (30, 32) comprises at least two separate flow restriction segments (30a, 32a) arranged next to each other in an axial direction of said guide vane ring (28)

9. Guide vane ring according to claim 8,
wherein said flow restriction segments (30a, 32a) are arranged on opposite sides of said turbine vanes (10) and each of said flow restriction segments (30a, 32a) have notches (40, 42) for accommodating said interlocking structures (16) of said turbine vanes (10).

10. Guide vane ring according to any one of claims 6 to 9, having an adapter element adjusted to said specific design type of said turbine, via which said flow restriction member (30, 32) is attached to at least one of said turbine vanes (10).

11. Turbine of a thermal power plant having a guide vane ring (28) according to any one of claims 6 to 10.

12. Process of manufacturing a turbine for a thermal power plant comprising the following steps:
manufacturing at least one turbine vane (10), in particular a guide vane, by manufacturing a blade section (14) of said turbine vane (10) integrally with an interlocking structure (16) for engaging with a vane mount of said turbine, and
mounting said turbine vane (10) in said vane mount by means of said interlocking structure (16),
**characterized in that** said blade section (14) is manufactured to have a profile adapted to said fluid flow conditions of turbines of a variety of different design types, and **in that** the process comprises the following steps: providing a flow restriction member (30, 32) manufactured separately from said at least one turbine vane (10), such that said flow restriction member (30, 32) is adapted to said fluid flow conditions of a turbine of a specific design type, and mounting said flow restriction member (30, 32) in said turbine for flow restriction of a turbine propulsion fluid in a radial direction of said turbine.

13. Process according to claim 12,
wherein said blade section (14) is made to have a profile adapted to fluid flow conditions of a variety of turbines designed for different rotational speeds, different mass flow rates and/or different access conditions.

14. Process according to claim 12 or 13,
wherein said interlocking structure (16) is made to have a shaped profile in a sectional view along a longitudinal axis (12) of said turbine vane (10).

15. Process according to any one of claims 12 to 14,
wherein said interlocking structure (16) is machined into a shape for arranging the turbine vane (10) in a vane position adapted to said fluid flow conditions of said turbine of said specific design type after manufacturing said interlocking structure (16) integrally with said blade section (14).

16. Process according to any one of claims 12 to 15,
wherein said flow restriction member (30, 32) borders a large angular range of a flow channel (36) of said turbine for guiding the flow of a propulsion fluid, in particular surrounds said flow channel (36) completely, after being mounted in said turbine.

17. Process according to any one of claims 12 to 16,
wherein an adapter element adjusted to said specific design type of said turbine is provided and said flow restriction member (30, 32) is attached to at least one of said turbine vanes (10).
